# EUROPEAN PATENT APPLICATION

(11) **EP 4 661 330 A1**
(43) Date of publication of application: **10.12.2025**
(21) Application number: 25180168.4
(22) Date of filing: 02.06.2025
(51) Int. Cl.: H04L 5/00, H04L 5/14

(54) **TDD PATTERN AWARE CONFIGURATION OF REFERENCE SIGNALS**

(30) Priority: 04.06.2024 GB 202407900
(71) Applicant: Nokia Technologies Oy, 02610 Espoo (FI)
(72) Inventor: KOSKELA, Timo, Oulu (FI); KAIKKONEN, Jorma Johannes, Oulu (FI); KARJALAINEN, Juha Pekka, Sotkamo (FI); HAKOLA, Sami-Jukka, Oulu (FI)
(74) Representative: Nokia EPO representatives

(57) **Abstract**

An apparatus (200) may be configured to: receive, from a network node, synchronization signal block, SSB, presence information (400); receive, from the network node, information related to time division duplexing, TDD, pattern configuration; determine a presence of SBB in one or more specific time locations based on the received SSB presence information (400) and the information related to the TDD pattern configuration; and perform at least one measurement based on the determined presence of SSB in the one or more specific time locations.

## Description

### TECHNICAL FIELD

Various example embodiments generally relate to the field of wireless communication. Some example embodiments relate to configuration of reference signals in conjunction with TDD pattern information.

### BACKGROUND

In 6G (and beyond) physical layer design, it is aimed to provision the presence information of reference signals in the cell in efficient manner. The presence information may provision a UE (user equipment) with information on how the certain reference signals are transmitted in a cell. Furthermore, it is aimed to enable multiple transmission reception point (multi-TRP) capability for UE already in the initial access or as a result of initial access procedure. In other words, initial access in 6G may be considered to be multi-TRP aware. That means that the UE would be able to identify and inform network about strong TRPs in a cell as early as possible so that multi-TRP connection could be established accordingly as early as possible. It would be beneficial to provide improvements for reference signal transmission and reception design, for example, to be used in procedures related to initial access, measurement and/or multi-TRP connections.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to identify transmitted synchronization signal blocks (SSBs) based on mapping information associated with a time division duplexing (TDD) pattern. This enables compression of system information by reducing an amount of redundant information and signaled bits. This and other benefits may be achieved by the features of the independent claims. Further example embodiments are provided in the dependent claims, the description, and the drawings.

According to a first aspect, an apparatus is disclosed. The apparatus may comprise: at least one processor; and at least one memory storing instructions that, when executed by the at least one processor, cause the apparatus at least to: receive, from a network node, a first information element indicative of synchronization signal block, SSB, presence pattern; receive, from the network node, at least one second information element indicative of time division duplexing, TDD, configuration; and identify a presence of SSB in one or more specific time locations based on the first information element and the at least one second information element.

According to a second aspect, a method is disclosed. The method may comprise receiving, from a network node, a first information element indicative of synchronization signal block, SSB, presence pattern; receiving, from the network node, at least one second information element indicative of time division duplexing, TDD, configuration; and identifying a presence of SSB in one or more specific time locations based on the first information element and the at least one second information element.

According to a third aspect, an apparatus is disclosed. The apparatus may comprise: at least one processor; and at least one memory storing instructions that, when executed by the at least one processor, cause the apparatus at least to receive, from a network node, synchronization signal block, SSB, presence information; receive, from the network node, information related to a time division duplexing, TDD, pattern configuration; apply the received SSB presence information to a TDD pattern based on the received information; and determine, based on the applied SSB presence information, a presence of SSB in one or more specific time locations.

According to a fourth aspect, a method is disclosed. The method may comprise receiving, from a network node, synchronization signal block, SSB, presence information; receiving, from the network node, information related to a time division duplexing, TDD, pattern configuration; applying the received SSB presence information to a TDD pattern based on the received information; and determining, based on the applied SSB presence information, a presence of SSB in one or more specific time locations.

According to a fifth aspect, an apparatus is disclosed. The apparatus may comprise at least one processor; and at least one memory including instructions which, when executed by the at least one processor, cause the apparatus at least to: receive, from a network node, synchronization signal block, SSB, presence information; receive, from the network node, information related to a time division duplexing, TDD, pattern configuration; apply the received SSB presence information to a TDD pattern based on the received information; and determine, based on the applied SSB presence information, a presence of SSB in one or more specific time locations.

According to a sixth aspect, a method is disclosed. The method may comprise receiving, from a network node, synchronization signal block, SSB, presence information; receiving, from the network node, information related to a time division duplexing, TDD, pattern configuration; applying the received SSB presence information to a TDD pattern based on the received information; and determining, based on the applied SSB presence information, a presence of SSB(s) in one or more specific time locations.

According to a seventh aspect, an apparatus is disclosed. The apparatus may comprise at least one processor; and at least one memory including instructions which, when executed by the at least one processor, cause the apparatus at least to: configure synchronization signal block, SSB, presence information to be used by a user equipment with time division duplexing, TDD, pattern configuration to identify presence of SSB in one or more specific time locations; transmit, to the user equipment, the synchronization signal block, SSB, presence information; and transmit, to the user equipment, information related to the time division duplexing, TDD, pattern configuration.

According to an eight aspect, a method is disclosed. The method may comprise configuring synchronization signal block, SSB, presence information to be used by a user equipment with time division duplexing, TDD, pattern configuration to identify presence of SSB in one or more specific time locations; transmitting, to the user equipment, the synchronization signal block, SSB, presence information; and transmitting, to the user equipment, information related to the time division duplexing, TDD, pattern configuration.

According to a ninth aspect, an apparatus is disclosed. The apparatus may comprise at least one processor; and at least one memory including instructions which, when executed by the at least one processor, cause the apparatus at least to: receive, from a network node, synchronization signal block, SSB, presence information; receive, from the network node, information related to time division duplexing, TDD, pattern configuration; determine a presence of SBB in one or more specific time locations based on the received SSB presence information and the information related to the TDD pattern configuration; and perform at least one measurement based on the determined presence of SSB in the one or more specific time locations.

According to a tenth aspect, a method is disclosed. The method may comprise receiving, from a network node, synchronization signal block, SSB, presence information; receiving, from the network node, information related to time division duplexing, TDD, pattern configuration; determining a presence of SBB in one or more specific time locations based on the received SSB presence information and the information related to the TDD pattern configuration; and performing at least one measurement based on the determined presence of SSB in the one or more specific time locations.

According to an eleventh aspect, an apparatus is disclosed. The apparatus may comprise means for performing the method according to the second, fourth, sixth, eighth or tenth aspect, or any example embodiment(s) thereof, as provided in the description and/or the claims.

According to a twelfth aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the second, fourth, sixth, eighth or tenth aspect, or any example embodiment(s) thereof, as provided in the description and/or the claims.

Example embodiments of the present disclosure can thus provide apparatuses, methods, computer programs, computer program products, or computer readable media for improving various aspects of synchronization signal transmission and reception design. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a communication network;
FIG. 2 illustrates an example of an apparatus configured to practice one or more example embodiments;
FIG. 3 illustrates an example of a TDD configuration;
FIG. 4 illustrates an example of SSB presence information mapped to a TDD pattern;
FIG. 5 illustrates an example of SSB presence information mapped on a TDD pattern with each repetition of a downlink slot;
FIG. 6 illustrates an example of SSB presence information mapped on a TDD pattern over more than one TDD repetitions;
FIG. 7 illustrates another example of SSB presence information mapped on a TDD pattern over more than one TDD pattern repetitions;
FIG. 8 illustrates an example of SSB presence information mapped on a TDD pattern in any slot of the TDD pattern;
FIG. 9 illustrates an example of SSB presence information mapped on a TDD pattern when at least part of downlink slots is not provided with presence information;
FIGs. 10 to 14 illustrate examples of methods for mapping transmitted SSB in specific time locations.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

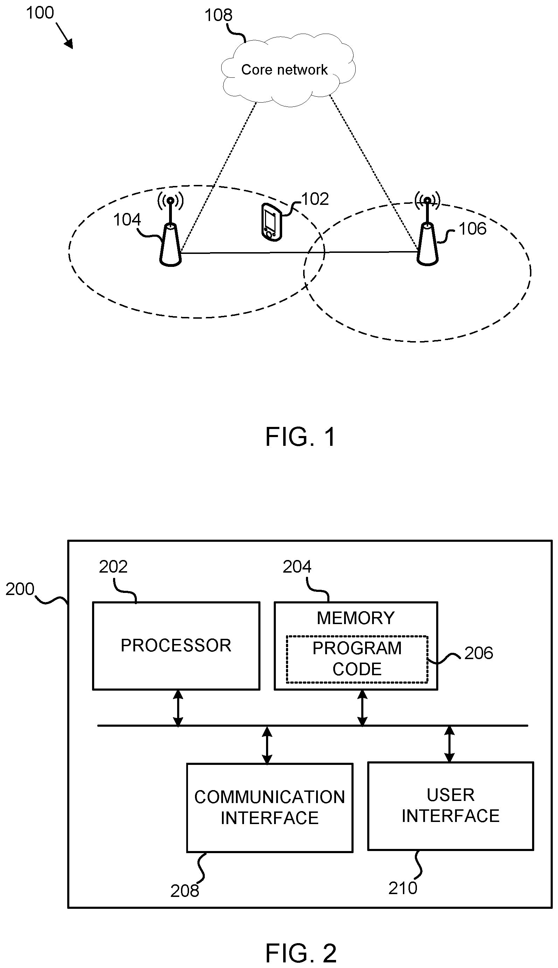

FIG. 1 illustrates an example of a communication network. Communication network 100 may comprise one or more access nodes 104, 106. Access node(s) 104, 106 may be part of a radio access network (RAN) configured to enable a device, represented throughout the description by UE 102, to access communication services provided by core network 108. Core network 108 may be implemented with various network functions (NF), including, for example, one or more user plane functions (UPF) and one or more access and mobility management functions (AMF). In connection with communication network 100, access node(s) 104, 106 and core network 108 may be collectively referred to as the 'network'. Access nodes and core network elements may be also referred to as network entities, network devices or network nodes. UE 102 may comprise a user device, a terminal apparatus, a terminal device, a mobile device, or the like. In one example, UE 102 may be a smartphone. UE 102 may be configured to communicate with access node(s) 104, 106 over a radio interface, which may be also referred to as an air interface.

The radio interface may be configured for example based on the 5G NR (New Radio) standard defined by the 3^{rd} Generation Partnership Project (3GPP), or any future standard or technology (e.g., 6G). Access nodes 104, 106 may comprise, for example, 5^{th} generation access nodes (gNB) and/or 6^{th} generation access nodes (6G gNB). Transmission by an access node to UE 102 may be called downlink (DL) transmission. Transmission by UE 102 to an access node may be called uplink (UL) transmission. UE 102 may be therefore configured to operate as a transmitter for uplink transmissions and as a receiver for downlink transmissions. Access node(s) 104, 106 may be configured to operate as a receiver for uplink transmissions and as a transmitter for downlink transmissions. Communication network 100 may comprise a wireless communication network or a mobile communication network, such as for example a cellular communication network.

An access node 104, 106 may be configured to communicate with UEs via one or more cells. A cell may be configured to serve UEs at a certain geographical area at a certain radio frequency, or, a range of radio frequencies around a centre frequency of the cell.

In multi-connectivity, UE 102 may be configured to be simultaneously connected to two or more TRPs, for example access node 104 as a master node and access node 106 as secondary node. UE 102 may be hence configured to communicate data via multiple cells served by different access nodes. Multi-TRP connection offers reliability and throughput enhancements compared to single-TRP. This provides energy efficiency as well because of enabling shorter active time for UE 102. Multi-TRP connection can comprise both intra-cell and inter-cell multi-TRP connections.

In 5G NR (5^{th} generation new radio), initial cell search, and initial time and frequency synchronization acquisition are based on UE searching and detecting SSB. SSB may carry specific signals for establishing downlink synchronization. SSB may comprise:
- Primary synchronization signal (PSS)
- Secondary synchronization signal (SSS)
- Physical broadcast channel (PBCH) and demodulation reference signal (DMRS) for PBCH demodulation.

For example, an access node may transmit a sequence of reference signals, such as SSB beams, with different directions for beam management. UE may detect the best beam among the sequence of SSB beams with respect to signal strength. For example, UE may measure a signal strength of detected SSB beams and report an indication of the measurement results to the access node. In a cell, there can be one or multiple SSBs to support beamforming for the SSB. A SSB burst, comprising the one or multiple SSBs, can be transmitted with certain periodicity in the cell. Default periodicity may be, for example, 20 ms.

SSB block has a certain length, such as four OFDM symbols in time and bandwidth of 20 resource blocks (RBs) in frequency. Due to a four-symbol time domain allocation, each slot where the SSB(s) can be transmitted can have up to two SSBs. System overhead only from the SSBs may be rather high when considering the number of slots affected and high number of SSBs required. For example, for certain frequencies, e.g., an upper part of frequency range 3 (FR3, 7-20 GHz) and frequency range 2 (FR2, above 24 GHz), the number of SSBs can be up to 32 or 64 meaning 16 and 32 affected DL slots every 20 ms, respectively. A maximum number of consecutive SSBs and a length of the SSB burst may depend on a SBB subcarrier spacing (SCS) and/or frequency range.

SSB presence in specific time location can be signaled, for example, using system information block (SIB) signaling. Depending on network requirement, network can selectively transmit one or more SSBs from a plurality of SSBs and inform UE of which SSBs are transmitted and which are not transmitted. This transmission pattern can be informed via a RRC IE (Information Element) called ssb-PositionInBurst. An information element (IE) for serving cell configuration of common SIB (ServingCellConfigCommonSIB) can be used to configure cell specific parameters of a serving cell of a UE in SIB1. The IE may comprise parameters for SSB positions in burst. The positions may be indicated with a bit string corresponding to SSB index values. Value 0 on the bit string can indicate that the corresponding SSB block is not transmitted and value 1 can indicate that the corresponding SSB is transmitted. Additionally, SMTC (SSB based measurement timing configuration) may include fields indicating the presence of SSBs in specific time locations.

An IE ServingCellConfigCommon can be used to configure cell specific parameters of a serving cell of a UE. The IE contains parameters which a UE would typically acquire from SSB, MIB (master information block) or SIBs when accessing the cell from IDLE state. With this IE, the network can provide this information in dedicated signalling when configuring a UE with secondary cells (SCells) or with an additional cell group (e.g., secondary cell group, SCG). The network can also provide the information for special cells (SpCells in master cell group, MCG, and SCG) upon reconfiguration with synchronization. The IE ServingCellConfigCommon can comprise parameters indicating SSB positions in burst, and the network can configure the same pattern (bit string of 0s and 1s) in this field as in the corresponding field in ServingCellConfigCommonSIB.

For example, UE 102 may be configured to measure the signal strength of each transmitted SSB the UE 102 has detected for a certain period (e.g., a period of one SSB set). From the measured signals, the UE 102 may identify a SSB index with strongest signal strength.

However, the 5G NR signaling mechanism for SSB presence in SSB time locations does not take into account a used TDD pattern in the cell. The TDD pattern indicates the uplink, downlink and/or flexible (UL/DL/F) slot division for the cell.

An objective of this disclosure is to consider the signaling mechanism to provision the presence information of SSBs in the specific SSB time locations that is dependent on at least one parameter related to a TDD pattern. In one example, a new field is signaled in the system information block or in an RRC message (e.g. via dedicated signaling or RRC configuration), wherein the field is applied in conjunction with the fields used to indicate the transmitted/presence of the SS/PBCH blocks in the cell in a specific SSB time location. In another example, a UE can apply the SSB presence information (e.g. RRC signaled) in conjunction with TDD pattern or DL/UL slot configuration in a cell or cells. In another example, the UE can apply the SSB presence information (e.g. RRC signaled presence information) in conjunction with TDD pattern or DL/UL slot information in a cell or cells. In another example, the UE can apply the SSB presence information (e.g. RRC signaled) at least partially based on the TDD pattern or DL/UL slot configuration in a cell or cells. In another example, the UE can apply the SSB presence information (e.g. RRC signaled) partially based on the TDD pattern or DL/UL slot configuration in a cell or cells. In some examples the SSB presence information may be applied for cells in a frequency layer and/or SSB having the same center frequency.

In an example embodiment, the SSB presence information may be provisioned via dedicated RRC signaling. In an example embodiment, the SSB presence information may be provisioned via system information/broadcast (RRC) signaling.

In some example, the SSB presence information may be provisioned via MAC layer signaling.

Example embodiments may enable compression of system information by reducing the amount of signaled bits. In addition, the amount of redundant information to be provided can be reduced. Because the UL slots may not carry SSB information, the signaling for the UL slots can be omitted.

The SSB presence information may be configured by network, such as access node 104. The network may transmit, to UE (e.g., UE 102), an indication of the configured SSB presence information. The SSB presence information may comprise a configured SSB presence pattern associated with at least one TDD pattern. For example, the SSB presence information 400 may comprise a bitmap. Further, a length of the bitmap may be used by the UE at least partially to determine the SSB presence information. Alternatively, the SSB presence information 400 may be conveyed in a codepoint value, wherein the codepoint value maps to a predefined value. For example, value 1 = 1000, value 2 = 1010, value 3 = 1001, etc.

The network may transmit an indication of the SSB presence information and an indication of the TDD pattern(s) in separate information elements. The information elements may be transmitted, for example, in an RRC message. Alternatively, at least one of the information elements may be transmitted in a SIB message. In one example, a separate information element provided by the network to the UE indicating whether the indicated SSB presence information is in association with the signaled TDD pattern(s). In one example, UE 102 may apply the SSB presence information to a specific TDD pattern once it has received the separate information element indicating the association.

For example, the SSB referred herein, may comprise of one or more of:
- Primary synchronization signal (PSS);
- Secondary synchronization signal (SSS);
- Physical broadcast channel (PBCH) and demodulation reference signal (DMRS) for PBCH demodulation; and/or
- Field or sequence provisioning TRP index/identifier.

The SSB presence information may be applied by UE 102 to a TDD pattern in a repeated manner. For example, the SSB information may be applied to each DL slot within a TDD pattern, and for each repetition of the TDD pattern. In one example, the SSB information may be applied to each repetition of DL slots within a TDD pattern. In one example, the SBB presence information may be applied over multiple TDD pattern repetitions. The SSB presence information may be applied only to DL slots. Alternatively, the SSB information may be also applied to slots with candidate locations for SSB, such as flexible slots. In one example, the SSB presence information may be applied to any slot of a TDD pattern, including UL slots.

At least one of the TDD pattern repetition and/or the SBB presence information can be determined based on at least one of the following parameters:
- fixed value length of SSB burst, e.g., the time window wherein the SSB time locations are present
- number of TDD pattern (repetitions)
- number of SSBs with presence information
- number of actually transmitter SSBs
- maximum number of SSB time locations per frequency range, and/or
- the length of the bitmap.
The parameters may be preconfigured at the UE 102. Alternatively, or in addition, one or more of the parameters may be received from the network, such as from access node 104 and/or 106. The network may provision the parameters via higher layer signaling (e.g. RRC) which may be dedicated or broadcast signaling.

The fixed value length of SSB burst may comprise the time window wherein the SSB(s) in time locations are present. The SSB burst may be defined, for example, in milliseconds, and the SSB presence information may apply for the duration of the SSB burst.

The number of TDD pattern repetitions may indicate for UE 102 to how many TDD pattern repetitions the SSB presence information is applied to.

In one example, the SSB presence information may be mapped until a certain number of SSB locations have been mapped with presence information, according to the parameter indicating the number of SSBs with presence information.

In one example, the SSB presence information may be mapped until a certain number of SSB locations have been mapped with presence information, wherein the number is determined based on the number of actual transmitted SSBs. For example, based on a SSB presence pattern of 0110, it can be determined that two SSBs are present.

In one example, in one frequence range (e.g., FR1), the maximum number of SSB time locations can be L = 4 or 8, and in another frequency range (e.g., FR2) the maximum number of SSB time locations can be 64, for example. In a third frequency range (e.g., FR3), the maximum number of SSB time locations may be, for example, L = 16 or 32, depending on the frequency.

In one example, the maximum number of SSB time locations and the length of bitmap indicating the SSB presence information may be considered jointly. For example, the bitmap may have 4 bits and the maximum number of SSB time locations may be 8. Based on these values, UE 102 may determine to apply the bitmap two times within a TDD pattern such that each SSB time location is mapped with a bit value.

In one example, the SSB presence information bitmap having length less than the number of SSB time locations is applied in repeated manner fully or partially so that the bitmap is applied fully or partially for each SSB time location.

In one example, the flexible slots are not used for mapping the SSB presence information. Alternatively, the flexible slots may be used for mapping the SSB presence information if indicated by the network or by a configuration of the UE. Alternatively, or in addition, the flexible slots are used for mapping the SSB presence information in case the number of DL symbols within the flexible slot exceed a certain number. For example, in case of a four-symbol time domain allocation, UE may be configured to apply the SSB presence information to flexible slots with at least one four DL symbols.

In one example, the SSB presence information can be applied over multiple different consecutive TDD patterns. In one example, different SSB presence information can be applied for each different TDD pattern, e.g. for pattern1 and pattern2. Alternatively, same SSB presence information is applied for the one or more TDD patterns, such as for pattern 1 and pattern2.

In one example, there can be a separate indication to which TDD pattern(s) the SBB presence information is applied to. The indication may be received, for example, in a third information element transmitted by access node 104 to UE 102. UE 102 may be configured to assume that SSB is not transmitted on slots for which the presence information is not applied to.

For example, UE 102 may be configured to receive, from a network node (e.g., access node 104) a message comprising at least one of TDD configuration related information or SSB presence information. UE 102 may be further configured to determine, based on the TDD configuration related information, valid DL slots or occasions for candidate SSB time locations. UE 102 may be further configured to determine at least one timing for at least one DL slot or a slot with downlink symbols within a TDD pattern based on the information related to the TDD configuration. UE 102 may be configured to determine, based on the SSB presence information, mapping information of the TDD pattern and apply the SSB presence information for the determined DL slots and/or slots with DL symbols such as flexible slots. UE 102 may be further configured to perform at least one measurement based on the applied SSB presence information. The network node may then receive a report comprising the measurements performed on the indicated SSBs from UE 102.

UE 102 may also determine, based on at least one of the TDD pattern or the SSB presence information, that SSB is not present for at least one slot. The slot may be, for example, an uplink slot or a flexible slot with less than a certain number of DL symbols (e.g., less than 4 DL symbols). In another example, the SSB may be present in a (flexible) slot with at least certain number of DL symbols. The certain number may be e.g. the number of symbols in an SSB. The certain number may be e.g. the number of symbols in an SSB and in addition to SSB symbols a certain number of (DL) symbols.

The TDD configuration related information may comprise, for example, a TDD pattern comprising a first periodicity. Alternatively, the TDD pattern may comprise multiple periodicities, such as a first and a second periodicity. The TDD pattern may comprise downlink uplink configuration.

Communication network 100 may comprise other network function(s), network device(s), or user device(s), in addition, or alternative to, those illustrated in FIG. 1. A network device may be configured to implement functionality of one or more network functions. Even though some embodiments have been described in the context of 5G, it is appreciated that embodiments of the present disclosure are not limited to this example network. Example embodiments may be therefore applied in any present or future communication networks. An apparatus, such as for example UE 102 or access node 104, 106, may comprise, or be configured to implement, e.g., by means of software, one or more of the protocol layers described herein.

FIG. 2 illustrates an example of an apparatus configured to practice one or more example embodiments. Apparatus 200 may comprise a device such as UE 102, or an access node 104, 106, an access point, a base station, a radio network node, or a split portion thereof (e.g., a central or distributed unit of an access node), a network device, a terminal device, or in general any apparatus configured to implement functionality described herein. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code or the like, for example operating system software and application software. Memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 200 may further comprise a communication interface 208 configured to enable apparatus 200 to transmit and/or receive information. Communication interface 208 may comprise an external communication interface, such as for example a radio interface between UE 102 and access node(s) 104, 106, or a communication interface between a central unit and distributed unit(s) of an access node (e.g., an Fs-U and/or Fs-C interface). Communication interface 208 may comprise one or more radio transmitters or receivers, which may be coupled to one or more antennas or apparatus 200, or be configured to be coupled to one or more antennas external to apparatus 200.

Apparatus 200 may further comprise other components and/or functions such as a user interface 210 comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause apparatus 200 to perform the method(s). In general, computer program instructions may be executed on means providing generic processing functions. Such means may be embedded for example in a personal computer, a smart phone, a network device, or the like. The method(s) may be thus computer-implemented, for example, based on algorithm(s) executable by the generic processing functions, an example of which is the at least one processor 202. The means may comprise transmission or reception means, for example one or more radio transmitters or receivers, which may be coupled or be configured to be coupled to one or more antennas. Apparatus 200 may comprise, for example, a network device, for example, an access node, an access point, a base station, or a central/distributed unit thereof. Although apparatus 200 is illustrated as a single device, it is appreciated that, wherever applicable, functions of apparatus 200 may be distributed to a plurality of devices.

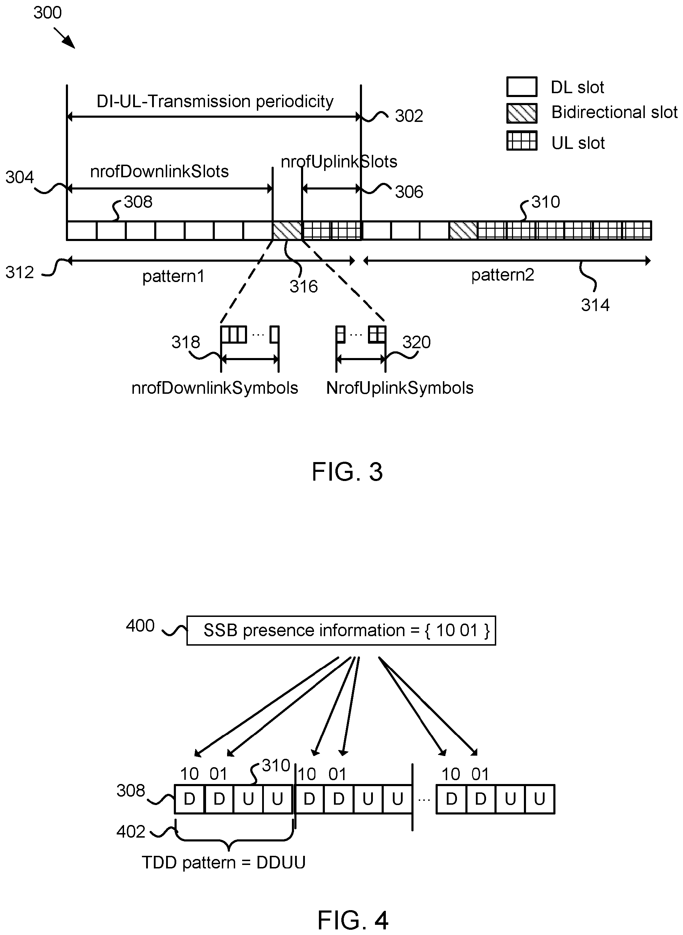

FIG. 3 illustrates an example of a TDD configuration. The TDD configuration 300 may be transmitted by a network node, such as access node 104, to a UE, such as UE 102. The TDD configuration 300 may comprise at least one parameter to be used in conjunction with provided SSB presence information to determine the SSB presence in a cell, e.g., actually transmitted SSBs in the cell. In one example, the at least one parameter may comprise a TDD pattern or a TDD configuration indicator. The TDD configuration indicator may refer to a value that indicates specific TDD configuration in a cell. TDD configuration may be or comprise a TDD pattern configuration.

The TDD pattern may have an uplink downlink configuration. FIG. 3 shows an example of a TDD UL-DL configuration including two different patterns, each with their own UL/DL slot partition. There may be 10 periodicity options, e.g. {0.5, 0.625, 1, 1.25, 2, 2.5, 3, 4, 5, 10}[ms] for a first pattern 312 (pattern1, P) and a second pattern 314 (pattern2, P2). Certain of these periodicities may be applied only with selected numerologies (e.g., 0.625ms with 120kHz, 1.25ms with 60kHz and 120kHz, and/or 2.5ms does not apply for 15kHz). When defining a pattern period, for every 20/P or 20/(P+P2) patterns, first symbol of the pattern may be a first symbol of an even frame.

The TDD UL-DL configuration may be given, for example, by an IE tdd-UL-DL-ConfigurationCommon, which gives reference SCS and pattern1 configuration. The pattern1 (or pattern2) can provide:
- a slot configuration period of P msec by DL-UL transmission periodicity 302
- a number of slots *dₛₗₒₜₛ* with downlink symbols (downlink slots 308) 304
- a number of downlink symbols *d_{sym}* 318 within a slot
- a number of slots *uₛₗₒₜₛ* with uplink symbols (uplink slots 310) 306
- a number of uplink symbols *u_{sym}* 320 within a slot.
In addition to downlink slots and uplink slots, a TDD pattern may comprise one or more flexible slots 316. A flexible slot may be also referred to a bidirectional slot, because the slot may comprise both uplink and downlink symbols. The parameters *d_{sym}* and *u_{sym}* may be provided for the flexible slots.

A slot configuration period of *P* + *P*₂ msec may include first *S* = P · 2^{*µ*_{ref}} slots and second *S*₂ = *P*₂ ·22^{*µ*_{ref}} slots, that is, slots of the first pattern 312 and slots of the second pattern 314 can be concatenated, as show in FIG. 3

FIG. 4 illustrates an example of SSB presence information mapped to a TDD pattern. Information indicative of the SSB presence information 400 may be received by a UE, such as UE 102, from a network node, such as access node 104. The SSB presence information 400 may comprise a bitmap. For example, the SSB presence information 400 may comprise a bitmap = {1001}. The SSB presence information 400 may have a bitmap length of *N.*

The SSB presence information 400 can be applied by UE to a specific TDD pattern configuration in a repeated manner. A TDD pattern may have one or more DL slots. Optionally, the one or more DL slots may be followed by one or more F bidirectional/flexible slots. The one or more DL slots and/or flexible slots may be followed by one or more UL slots. The bitfield position entries in the bitmap of length N may be mapped in sequence to the corresponding downlink slots. The mapping may be repeated on each repetition of the TDD pattern. A period of the TDD pattern may be provided for the UE, for example, by an information element comprising a DL-UL transmission periodicity.

In the example of FIG. 4, the bitmap length is N = 2. For simple illustration, each TDD pattern 402 comprises 2 DL slots 308 and 2 UL slots 310. One slot may have, for example, two SSB candidate locations/time locations. The SSB presence information 400 is mapped to DL slots 308 in a sequential manner of the bitfields (10, 01) in the SSB presence information 400. Each bitfield may comprise bits for candidate locations within one downlink slot, wherein value 1 indicates a presence/transmission of SSB and value 0 indicates that SSB is not present/transmitted. The same information (e.g., {1001}) is repeated and mapped on each TDD pattern repetition.

In other words, the signaling of SSB presence information 400 is applied (e.g. repeats the same) with each repetition of the TDD pattern 402. For example, in each repetition of the TDD pattern 402, the SSB presence information may be mapped to DL slots 308 in the TDD pattern 402. SSB presence information may be omitted for UL slots 310 of the TDD pattern, as the UL slots may not be used for transmission of the SSB blocks.

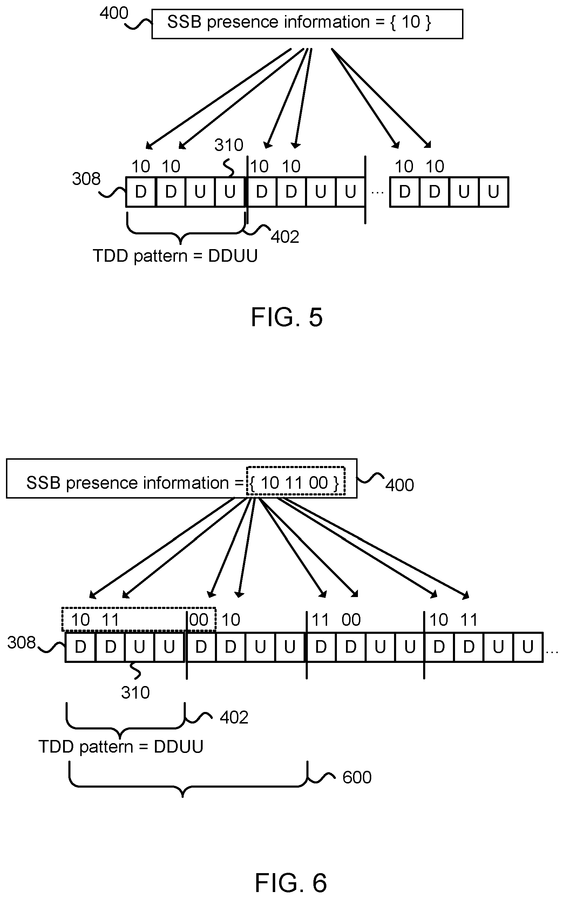

Alternatively, signaling of SSB presence information may be applied with each repetition DL slots of a TDD pattern, as illustrated in FIG. 5. For example, the SSB presence information 400 may comprise a bitmap = {10}. The TDD pattern 402 may comprise two consecutive DL slots 308 followed by two consecutive UL slots 310. The UE may apply the bitfield (10) of the bitmap with each repetition of the DL slots 308 of the TDD pattern 402. The UE may continue mapping of the provided SSB presence information 400 for each repetition of the TDD pattern by applying the bits of the bitmap sequentially on candidate SSB locations of each DL slot comprised in said consecutive TDD patterns.

FIG. 6 illustrates another example of SSB presence information mapped to a TDD pattern. Here, the SSB presence information 400 may be mapped on the DL slots over the repeated TDD pattern 402. For example, the SSB presence information 400 may be mapped to K TDD pattern periods. In FIG. 6, K=2, meaning that the SSB presence information 400 is mapped over two consecutive TDD patterns 402. After the first K TDD patterns 600, the SSB presence information mapping may be repeated over the next K TDD patterns 600. Further, in case the SSB presence information does not evenly match the TDD pattern 402, e.g., the SSB presence information extends over more than one repetition of the TDD pattern 402, the mapping can be repeated by continuing from next downlink symbols of TDD pattern where previous mapping ended. Alternatively, the mapping can be repeated by starting from next repetition of the TDD pattern.

In one embodiment, in any of the examples herein, the SSB presence information bitmap may be mapped partially to the SSB time locations. As an example, the bitmap may be applied fully on the first TDD pattern repetition and partially on the next repetition ( e.g. so that bitmap applies for possible SSB time location). The remaining SSB presence bit(s) (after applying partially) may not be mapped to any time location.

For example, the SSB presence information 400 may comprise a bitmap of 6 bits (e.g., {001100}) which is mapped over two repetitions of the TDD pattern 402 (K=2). When the TDD pattern 402 comprises two DL slots 308 and two UL slots 310, each K TDD pattern repetitions may comprise 8 candidate locations (two candidate locations within a DL slot). Candidate locations which have not a corresponding bit, no SSB presence may be assumed for those candidate locations. For example, in the case of 6 bits and 8 candidate locations, the bits may be mapped to first six candidate locations, the remaining two locations may be determined not to have a transmitted SSB, and then the mapping may be repeated starting from a first DL slot of the next K TDD pattern repetitions. Alternatively, instead of assuming no mapping for the remaining candidate locations, the mapping may be repeated starting from the next DL slot, which may be located within the TDD pattern which previous DL slot were already mapped, as illustrated in FIG. 6.

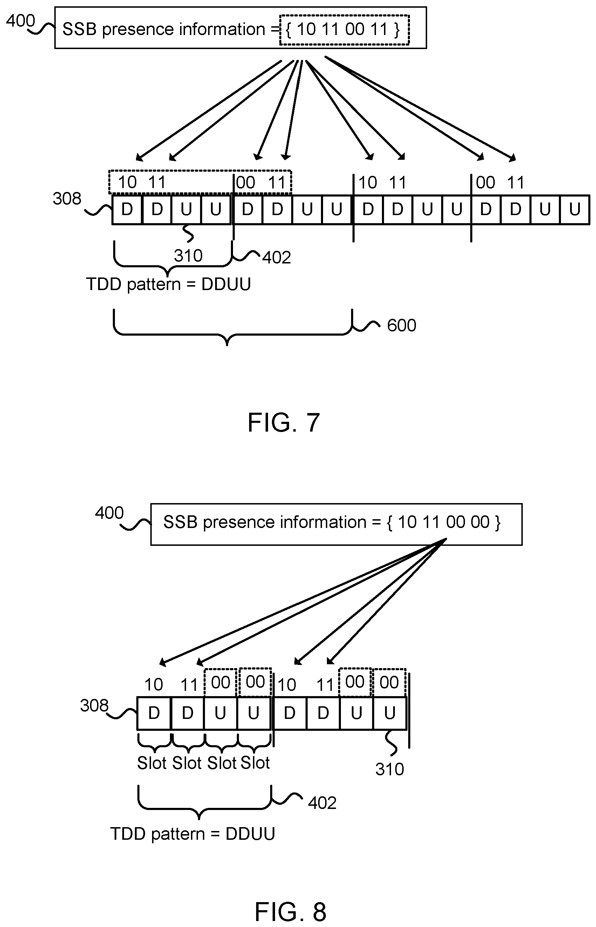

In one example, the SSB presence information may be mapped to K consecutive TDD pattern repetitions and same information is mapped repeatedly over the next N instances of K TDD pattern repetitions, as illustrated in FIG. 7. For example, the SSB presence information 400 may comprise an 8-bit information bitmap (e.g., {10110011}). Further, the TDD pattern may have 2 DL slots 308 followed by two UL slots 310. The mapping may be performed over K=2 repetitions of the TDD pattern. Hence, the K TDD pattern repetitions 600 have 8 candidate locations (e.g., each DL slot may have two candidate locations) corresponding to the 8 bits of the SSB presence information. In other words, the SSB presence information may be configured, and mapped, such that it matches the K TDD pattern repetitions. That is, each DL slot within the K TDD pattern repetitions is provided with mapping information.

FIG. 8 illustrates an example of SSB presence information mapped on a TDD pattern in any slot of the TDD pattern. In other words, the signaling of SSB presence information 400 can be mapped on the SSB time locations (or candidate locations) in any slot comprising DL slots 308, UL slots 310, and/or flexible slots, if any. Further, the SSB presence information 400 is repeated for each repetition of the TDD pattern slots over the repeated TDD pattern 402. For example, the SSB presence information may comprise, or indicate, a bitmap with bits {10110000}. A length of the bitmap may correspond to the number of slots of the TDD pattern 402. In the example of FIG. 8, first four bits (10 11) may be mapped to corresponding candidate locations of DL slots and the remaining four bits (00 00) to corresponding candidate locations of UL slots. Based on the mapping, it can be identified that the first DL slot has one SSB present and the second DL slot has two SSBs present. The UL slots, mapped with bits having a value of 0, are indicated not to have any presence of SSBs based on the mapping.

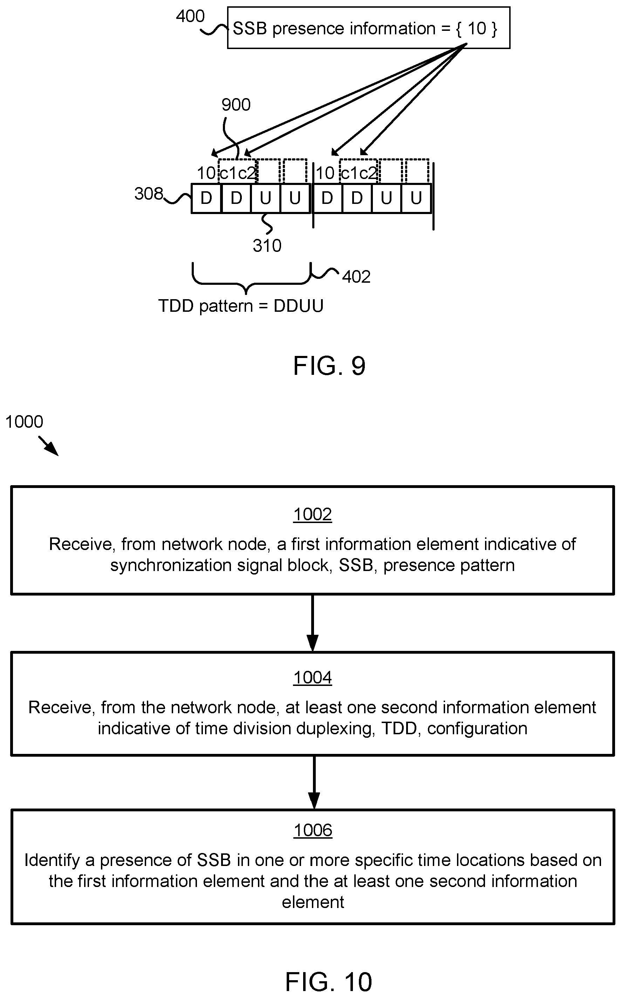

FIG. 9 illustrates an example of SSB presence information mapped on a TDD pattern when at least part of downlink slots is not provided with presence information. For example, N bitmap fields providing the presence information for SSBs can be mapped to the first N time locations of possible candidate locations in the TDD pattern and per TDD pattern repetitions.

For example, the SSB presence information 400 may comprise a bitmap = {10} to be applied on the TDD pattern 402 comprising two DL slots 308 followed by two UL slots 310. Hence, the bitmap has bits corresponding to first two candidate locations located in a first DL slot, and the rest of the candidate locations (in subsequent DL slot(s)) are not provided with mapping information. Thus, the SSB presence information can be determined as 'not present' for those slots/candidate locations without corresponding bits. For example, c1 and c2 may be given as candidate locations 900 in a second DL slot but the presence information (bits 10) mapped to the first DL slot is not repeated for the candidate locations 900 of the next DL slots within the TDD pattern 402. However, the SSB presence information 400 may be again mapped to first candidate locations of next TDD pattern repetition(s).

FIG. 10 illustrates an example of a method 1000 for mapping transmitted SSB in specific time locations, according to Example embodiment 1 of method 1000. Method 1000 may be performed by a mobile device, e.g., UE 102, or by a control apparatus configured to control the functioning thereof, when installed therein.

At operation 1002, the method may comprise receiving, from network node, a first information element indicative of synchronization signal block, SSB, presence pattern.

At operation 1004, the method may comprise receiving, from the network node, at least one second information element indicative of time division duplexing, TDD, configuration.

At operation 1006, the method may comprise identifying a presence of SSB in one or more specific time locations based on the first information element and the at least one second information element.

Method 1000 may be performed, for example, according to any of the following example embodiments:
Example embodiment 2: Method 1000 according to Example embodiment 1, wherein the first information element comprises SSB presence information and second information element comprises a TDD pattern or a TDD pattern configuration indicator.
Example embodiment 3: Method 1000 according to Example embodiment 2, wherein SSB presence information is based on at least one of a bitmap, a length of the bitmap or a codepoint value.
Example embodiment 4: Method 1000 according to Example embodiment 2 or 3, wherein the presence of SSB in one or more specific time locations is identified by applying the SSB presence information to downlink slots within the TDD pattern for each repetition of the TDD pattern.
Example embodiment 5: Method 1000 according to Example embodiment 2 or 3, wherein the SSB presence information is mapped on downlink slots of the TDD pattern over more than one repetition of the TDD pattern.
Example embodiment 6: Method 1000 according to Example embodiment 5, wherein the SBB presence information matches the more than one repetition of the TDD pattern and the mapping is repeated over each consecutive more than one repetition of the TDD pattern.
Example embodiment 7: Method 1000 according to Example embodiment 5, wherein the SSB presence information extends over more than one repetition of the TDD pattern and the mapping is one of repeated by continuing from next downlink symbols of TDD pattern where the previous mapping ended or from next repetition of the TDD pattern.
Example embodiment 8: Method 1000 according to any of Example embodiments 4 to 7, wherein the SSB presence information is further applied to flexible slots of the TDD pattern based on at least one of an indication received from the network node or a number of the downlink symbols in the flexible slot exceeding a predefined value.
Example embodiment 9: Method 1000 according to any of Example embodiments 1 to 8, wherein at least one of the first information element or the second information element is received via a radio resource control, RRC, message or a system information block, SIB, message.
Example embodiment 10: Method 1000 according to any of Example embodiments 1 to 9, wherein the method comprises receiving a third information element comprising an indication of an association of the SSB presence pattern with the TDD configuration.
Example embodiment 11: Method 1000 according to Example embodiment 10, wherein the first information element comprises SSB presence information for a plurality of TDD patterns and the third information element indicates to which of the plurality of TDD patterns the SBB presence information is applied to.
Example embodiment 12: Method 1000 according to any of Example embodiments 2 to 11, wherein at least one of a repetition of the TDD pattern or the SSB presence information are determined based on at least one of the following:
   - a fixed value length of a SSB burst;
   - a number of TDD pattern repetitions;
   - a number of SSBs with presence information;
   - a number of transmitted SSBs;
   - a maximum number of SSB time locations per frequency range; and/or
   - a length of a bitmap comprised in the SSB presence information.

In one example, at least one of a repetition of the TDD pattern or the SSB presence information are determined based the RRC signaled value (dedicated signaling or broadcast signaling). In one example, at least one of a repetition of the TDD pattern or the SSB presence information are determined based a value defined in a specification for the RRC signaled value (e.g., preconfigured at the UE).

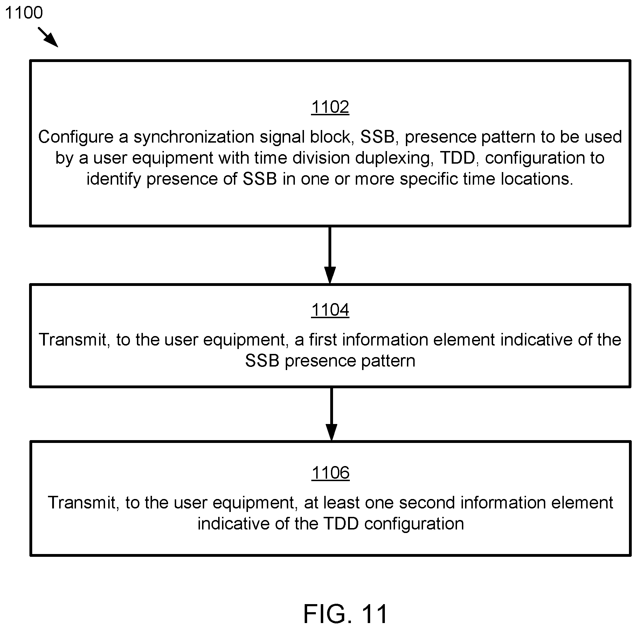

FIG. 11 illustrates an example of another method for mapping transmitted SSB in specific time locations, according to Example embodiment 1 of method 1100. Method 1100 may be performed by a network node, e.g., access node 104, or by a control apparatus configured to control the functioning thereof, when installed therein.

At operation 1102, the method may comprise configuring a synchronization signal block, SSB, presence pattern to be used by a user equipment with time division duplexing, TDD, configuration to identify presence of SSB in one or more specific time locations. The SSB presence information may comprise, for example, SSB presence information such as a bitmap or a codepoint value. The configuration may be performed, for example, to enable mapping of the SSB presence information to a TDD pattern as disclosed in Example embodiments of the method 1100.

At operation 1104, the method may comprise transmitting, to the user equipment, a first information element indicative of the SSB presence pattern.

At operation 1106, the method may comprise transmitting, to the user equipment, at least one second information element indicative of the TDD configuration.

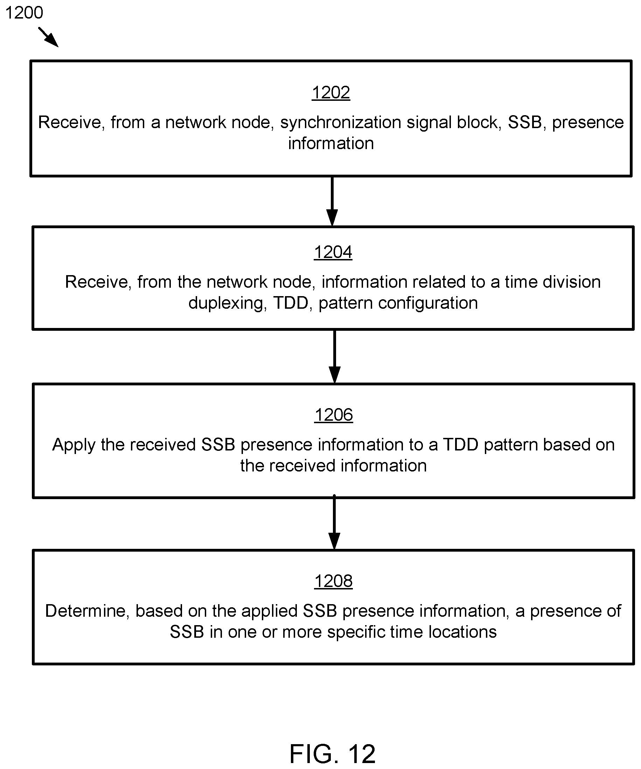

FIG. 12 illustrates another example of a method for mapping transmitted SSB in specific time locations, according to Example embodiment 1 of method 1200. Method 1200 may be performed by a mobile device, e.g., UE 102, or by a control apparatus configured to control the functioning thereof, when installed therein.

At operation 1202, the method may comprise receiving, from a network node, synchronization signal block, SSB, presence information.

At operation 1204, the method may comprise receiving, from the network node, information related to a time division duplexing, TDD, pattern configuration.

At operation 1206, the method may comprise applying the received SSB presence information to a TDD pattern based on the received information.

At operation 1208, the method may comprise determining, based on the applied SSB presence information, a presence of SSB in one or more specific time locations.

Method 1200 may be performed, for example, according to any of the following example embodiments:
Example embodiment 2: Method 1200 according to Example embodiment 1, wherein the information related to the TDD pattern configuration comprises the TDD pattern or a TDD pattern configuration indicator.
Example embodiment 3: Method 1200 according to Example embodiment 1 or 2, wherein SSB presence information is based on at least one of a bitmap, a length of the bitmap or a codepoint value.
Example embodiment 4: Method 1200 according to any of Example embodiments 1 to 3, wherein the SSB presence information is applied with each repetition of downlink slots within the TDD pattern.
Example embodiment 5: Method 1200 according to example embodiment 4, wherein the SSB presence information is further applied to flexible slots of the TDD pattern based on at least one of an indication received from the network node or a number of the downlink symbols in the flexible slot exceeding a predefined value.
Example embodiment 6: Method 1200 according to any of Example embodiments 1 to 3, wherein the SSB presence information is mapped to candidate locations in all slots within the TDD pattern for each repetition of the TDD pattern.
Example embodiment 7: Method 1200 according to any of Example embodiments 1 to 3, wherein the SSB presence information is not provided for at least part of downlink slots within the TDD pattern; and the method comprises determining that a SSB is not present in a downlink slot for which the SSB presence information is not provided.
Example embodiment 8: Method 1200 according to Example embodiment 7, wherein the SSB presence information is mapped to first candidate locations in the TDD pattern for each repetition of the TDD pattern when at least part of the downlink slots within the TDD pattern is not provided with the SBB presence information.
Example embodiment 9: Method 1200 according to any of Example embodiments 1 to 8, wherein at least one of the SSB presence information or the information related to the TDD pattern configuration is received via a radio resource control, RRC, message or a system information block, SIB, message.
Example embodiment 10: Method 1200 according to any of Example embodiments 1 to 9, wherein the SSB presence information is associated to a plurality of TDD patterns; and the method further comprises receiving, from the network node, an indication of one or more TDD patterns among the plurality of TDD patterns for which the SSB presence information is applied to.
Example embodiment 11: Method 1200 according to Example embodiment 10, wherein the SSB presence information comprises different SSB presence information for different TDD patterns.
Example embodiment 12: Method 1200 according to any of Example embodiments 1 to 11, wherein the method comprises determining at least one of repetition of the TDD pattern or the SSB presence information based on at least one of the following:
   - fixed value length of SSB burst;
   - number of TDD pattern repetitions;
   - number of SSBs with presence information;
   - number of transmitted SSBs;
   - maximum number of SSB time locations per frequency range; or
   - a length of a bitmap indicating the SSB presence information.

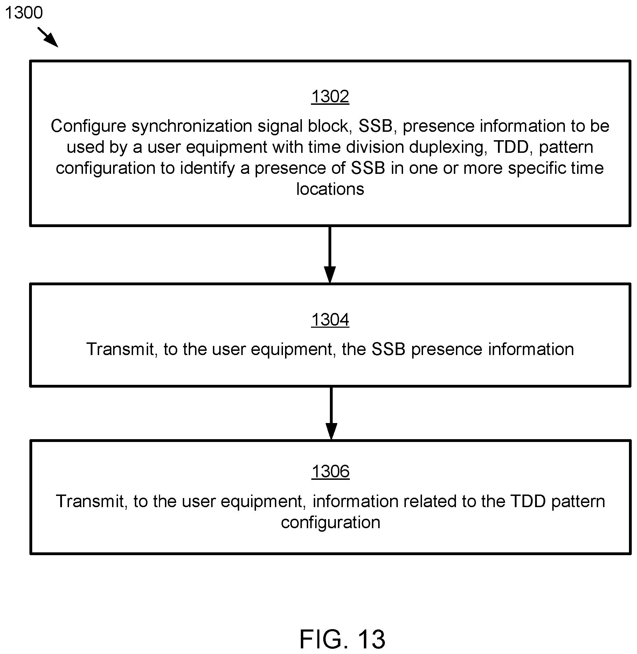

FIG. 13 illustrates another example of a method for mapping transmitted SSB in specific time locations, according to Example embodiment 1 of method 1300. Method 1300 may be performed by a network node, e.g., access node 104, or by a control apparatus configured to control the functioning thereof, when installed therein.

At operation 1302, the method may comprise configuring synchronization signal block, SSB, presence information to be used by a user equipment with time division duplexing, TDD, pattern configuration to identify a presence of SSB in one or more specific time locations. The configuration may be performed, for example, to enable mapping of the SSB presence information to a TDD pattern as disclosed in Example embodiments of the method 1200.

At operation 1304, the method may comprise transmitting, to the user equipment, the synchronization signal block, SSB, presence information.

At operation 1306, the method may comprise transmitting, to the user equipment, information related to the time division duplexing, TDD, pattern configuration.

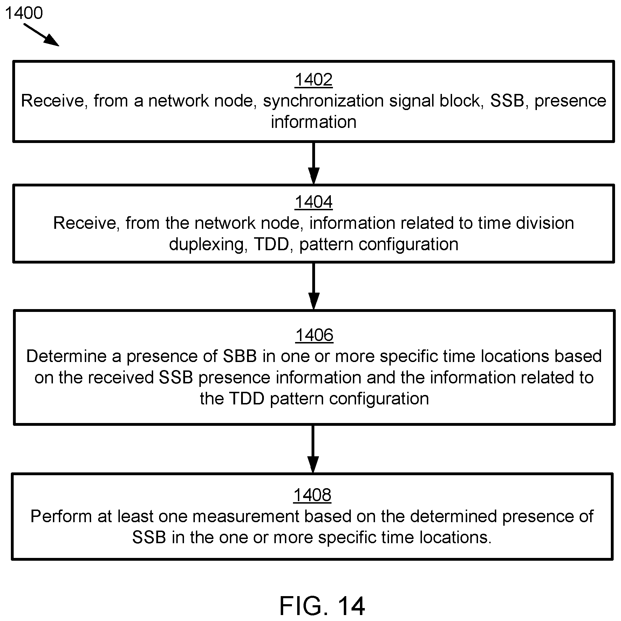

FIG. 14 illustrates another example of a method 1400 for mapping transmitted SSB in specific time locations, according to Example embodiment 1 of the method 1400. Method 1400 may be performed by a mobile device, e.g., UE 102, or by a control apparatus configured to control the functioning thereof, when installed therein.

At operation 1402, the method may comprise receiving, from a network node, synchronization signal block, SSB, presence information.

At operation 1404, the method may comprise receiving, from the network node, information related to time division duplexing, TDD, pattern configuration.

At operation 1406, the method may comprise determining a presence of SBB in one or more specific time locations based on the received SSB presence information and the information related to the TDD pattern configuration.

At operation 1408, the method may comprise performing at least one measurement based on the determined presence of SSB in the one or more specific time locations.

Method 1400 may be performed, for example, according to any of the following example embodiments:
Example embodiment 2: Method 1400 according to Example embodiment 1, wherein the method comprises determining, based on the information related to the TDD pattern configuration, at least one slot with downlink symbols within a TDD pattern for candidate time locations of a SSB; determining, based on the SSB presence information, mapping information for the TDD pattern; and determining the presence of SSB in one or more specific time locations by applying the SSB presence information to the determined at least one slot with downlink symbols based on the determined mapping information.
Example embodiment 3: Method 1400 according to Example embodiment 1 or 2, wherein the SSB presence information is associated to a plurality of TDD patterns; and the method comprises receiving, from the network node, an indication of one or more TDD patterns among the plurality of TDD patterns for which the SSB presence information is applied to.
Example embodiment 4: Method 1400 according to Example embodiment 3, wherein the SSB presence information comprises different SSB presence information for different TDD patterns.
Example embodiment 5: Method 1400 according to any of Example embodiments 1 to 4, wherein the SSB presence information is based on at least one of a bitmap, a length of the bitmap or a codepoint value.
Example embodiment 6: Method 1400 according to any of Example embodiments 2 to 5, wherein the SSB presence information is applied to downlink slots within the TDD pattern for each repetition of the TDD pattern.
Example embodiment 7: Method 1400 according to any of Example embodiments 2 to 5, wherein the SSB presence information is mapped on downlink slots of the TDD pattern over more than one repetition of the TDD pattern.
Example embodiment 8: Method 1400 according to Example embodiment 7, wherein the SBB presence information matches the more than one repetition of the TDD pattern and the mapping is repeated over each consecutive more than one repetition of the TDD pattern.
Example embodiment 9: Method 1400 according to Example embodiment 7, wherein the SBB presence information extends over more than one repetition of the TDD pattern, and the mapping is one of repeated by continuing from next downlink symbols of TDD pattern where previous mapping ended or from next repetition of the TDD pattern.
Example embodiment 10: Method 1400 according to any of Example embodiments 2 to 5, wherein the SSB presence information is applied with each repetition of downlink slots within the TDD pattern.
Example embodiment 11: Method 1400 according to any of Example embodiments 2 to 5, wherein the SSB presence information is mapped to candidate time locations in all slots within the TDD pattern for each repetition of the TDD pattern.
Example embodiment 12: Method 1400 according to any of Example embodiments 2 to 5, wherein the SSB presence information is not provided for at least part of downlink slots within the TDD pattern; and the method further comprises determining that a SSB is not present in a downlink slot for which the SSB presence information is not provided.
Example embodiment 13: Method 1400 according to any of Example embodiments 1 to 12, wherein the information related to the TDD pattern configuration comprises a TDD pattern with one or more periodicities and downlink uplink configuration.
Example embodiment 14: Method 1400 according to any of Example embodiments 1 to 13, wherein at least one of the SSB presence information or the information related to the TDD pattern configuration is received via a radio resource control, RRC, message or a system information block, SIB, message.
Example embodiment 15: Method 1400 according to any of Example embodiments 1 to 14, wherein the method comprises determining at least one of a repetition of the TDD pattern or the SSB presence information based on at least one of the following:
   - a fixed value length of a SSB burst;
   - a number of TDD pattern repetitions;
   - a number of SSBs with presence information;
   - a number of transmitted SSBs;
   - a maximum number of SSB time locations per frequency range; and/or
   - a length of a bitmap comprised in the SSB presence information.
Example embodiment 16: Method 1400 according to any of Example embodiments 2 to 15, wherein the at least one slot with downlink symbols comprises at least one flexible slot, and wherein the SSB presence information is determined to be applied to the at least one flexible slot based on at least one of an indication received from network node or a number of the downlink symbols in the flexible slot exceeding a predefined value.
Example embodiment 17: Method 1400 according to any of Example embodiments 1 to 16, wherein the method comprises determining that SSB is not present for at least one slot based on the information related to the TDD pattern configuration and the SSB presence information, wherein the at least one slot is an uplink slot or a flexible slot with less than a predefined value of downlink symbols.

Further features of the methods directly result for example from functionality of UE 102, or access node(s) 104, 106, as described throughout the description, claims, and drawings, and are therefore not repeated here. An apparatus, for example a device such as UE 102, or a network node, may be configured to perform or cause performance of any aspect of the method(s) described herein. Further, a computer program, a computer program product, or a (non-transitory) computer-readable medium may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus (200), comprising:
at least one processor (202); and
at least one memory (204) including instructions that, when executed by the at least one processor (202), cause the apparatus (200) at least to:
receive, from a network node, synchronization signal block, SSB, presence information (400);
receive, from the network node, information related to time division duplexing, TDD, pattern configuration;
determine a presence of SBB in one or more specific time locations based on the received SSB presence information (400) and the information related to the TDD pattern configuration; and
perform at least one measurement based on the determined presence of SSB in the one or more specific time locations.

2. The apparatus (200) of claim 1, wherein the apparatus comprises a user equipment (102).

3. The apparatus (200) of any preceding claim, caused to:
determine, based on the information related to the TDD pattern configuration, at least one slot with downlink symbols within a TDD pattern (402) for candidate time locations of a SSB;
determine, based on the SSB presence information (400), mapping information for the TDD pattern (402); and
determine the presence of SSB in one or more specific time locations by applying the SSB presence information (400) to the determined at least one slot with downlink symbols based on the determined mapping information.

4. The apparatus (200) of any preceding claim, wherein the SSB presence information (400) is at least one of associated to a plurality of TDD patterns (402) or comprises different SSB presence information (400) for different TDD patterns (402); and the apparatus (200) is caused to:
receive, from the network node, an indication of one or more TDD patterns (402) among the plurality of TDD patterns (402) for which the SSB presence information (400) is applied to.

5. The apparatus (200) of any preceding claim, wherein the SSB presence information (400) is based on at least one of a bitmap, a length of the bitmap or a codepoint value.

6. The apparatus (200) of any of claims 3 to 5, wherein the SSB presence information (400) is applied one of:
to downlink slots (308) within the TDD pattern (402) for each repetition of the TDD pattern (402); or
with each repetition of downlink slots (308) within the TDD pattern (402).

7. The apparatus (200) of any of claims 3 to 5, wherein the SSB presence information (400) is mapped on downlink slots (308) of the TDD pattern (402) over more than one repetition of the TDD pattern (402).

8. The apparatus (200) of claim 7, wherein the SBB presence information one of:
matches the more than one repetition of the TDD pattern (402) and the mapping is repeated over each consecutive more than one repetition of the TDD pattern (402); or.
extends over more than one repetition of the TDD pattern (402), and the mapping is one of repeated by continuing from next downlink symbols of TDD pattern (402) where previous mapping ended or from next repetition of the TDD pattern (402).

9. The apparatus (200) of any of claims 3 to 5, wherein the SSB presence information (400) is mapped to candidate time locations in all slots within the TDD pattern (402) for each repetition of the TDD pattern (402).

10. The apparatus (200) of claim 3 to 5, wherein the SSB presence information (400) is
not provided for at least part of downlink slots (308) within the TDD pattern (402); and the apparatus is caused to determine that a SSB is not present in a downlink slot (308) for which the SSB presence information (400) is not provided.

11. The apparatus (200) of any preceding claim, wherein the information related
to the TDD pattern configuration comprises a TDD pattern (402) with one or more periodicities and downlink uplink configuration.

12. The apparatus (200) of any preceding claim, wherein at least one of the SSB
presence information (400) or the information related to the TDD pattern configuration is received via a radio resource control, RRC, message or a system information block, SIB, message.

13. The apparatus (200) of any preceding claim, wherein the apparatus (200) is caused
to determine at least one of a repetition of the TDD pattern (402) or the SSB presence information (400) based on at least one of the following:
- a fixed value length of a SSB burst;
- a number of TDD pattern (402) repetitions;
- a number of SSBs with presence information;
- a number of transmitted SSBs;
- a maximum number of SSB time locations per frequency range; and/or
- a length of a bitmap comprised in the SSB presence information (400).

14. The apparatus (200) of any claims 3 to 13, wherein the at least one slot with
downlink symbols comprises at least one flexible slot (316), and wherein the SSB presence information (400) is determined to be applied to the at least one flexible slot (316) based on at least one of an indication received from network node or a number of the downlink symbols (318) in the flexible slot (316) exceeding a predefined value.

15. A method, comprising:
receiving (1402), from a network node, synchronization signal block, SSB, presence information (400);
receiving (1404), from the network node, information related to time division duplexing, TDD, pattern configuration;
determining (1406) a presence of SBB in one or more specific time locations based on the received SSB presence information (400) and the information related to the TDD pattern configuration; and
performing (1408) at least one measurement based on the determined presence of SSB in the one or more specific time locations.
